# EUROPEAN PATENT APPLICATION

(11) **EP 4 822 652 A1**
(43) Date of publication of application: **14.10.2026**
(21) Application number: 26171077.6
(22) Date of filing: 08.04.2026
(51) Int. Cl.: G06V 10/774, G06V 10/82, G06V 20/40, G06V 20/00, G06V 30/19

(54) **PROGRAM, METHOD AND APPARATUS FOR DETECTION DEEPFAKE VIDEOS**

(30) Priority: 09.04.2025 JP 2025064493
(71) Applicant: FUJITSU LIMITED, Kawasaki-shi, Kanagawa 211-8588 (JP)
(72) Inventor: Yoshii, Akihito, Kawasaki-shi, Kanagawa, 211-8588 (JP)
(74) Representative: Hoffmann Eitle

(57) **Abstract**

An information processing apparatus (100) classifies time-series frames into a plurality of clusters by executing clustering on the time-series frames based on feature amounts of the time-series frames, the time-series frames being included in a moving image belonging to a class of a real moving image or a class of a fake moving image, extracts a concept from each of the plurality of clusters, determines whether the concept extracted from the plurality of clusters is a concept specific to the class or a concept specific to the cluster, sets a weight to the plurality of clusters based on the determination result, and trains a model for estimating a class of a target moving image based on a frame selected based on weights set for the plurality of clusters.

## Description

### FIELD

The embodiments discussed herein are related to an information processing program and the like.

### BACKGROUND

Due to the progress of technologies such as generative artificial intelligence (AI), there is a problem of diffusion of fake content that is difficult to distinguish from reality. Such fake content is called a deep fake. The deep fake is applied to sound, text, and the like in addition to a still image and a moving image. For example, falsification or fabrication of a part or all of an actual image or speech may greatly affect society in a scene such as an election or a disaster.

In order to prevent social confusion, development of a technology for detecting deep fakes is desired, and there are many attempts to detect deep fakes with machine learning models such as neural networks.

Note that, in a case where a deep fake is detected for a still image or a moving image, it is desirable to detect the deep fake without a bias in attributes such as sex and age of a target person. For example, if a moving image of a male is more likely to be determined to be deep fake, a bias exists and is an undesirable state.

Discover and Cure (DISC) is a related art for mitigating bias of a still image. In the DISC, in a task classification task of a still image, a concept having a spurious correlation is detected for each class, and a machine learning model is retrained using an image subjected to data augmentation, thereby mitigating bias due to the spurious correlation.

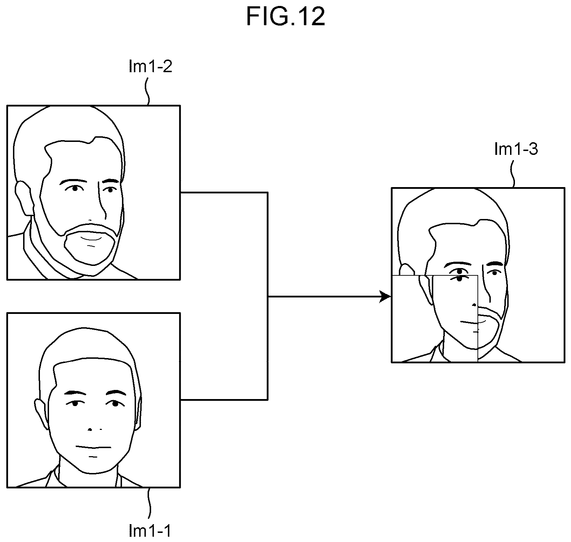

As a related art related to data augmentation, there is a technique called CutMix. FIG. 12 is a diagram for describing data augmentation. In CutMix, an image is extracted from each of the clusters whose bias is desired to be mitigated, and a machine learning model is trained using an image obtained by combining a part of one image with the other image. The example illustrated in FIG. 12 illustrates an example in which an image Im1-3 is generated by combining a part of an image Im1-1 with an image Im1-2. Using the image Im1-3 as an input, training is performed so that the output of the machine learning model approaches the ground truth label.

Non Patent Document 1: ShirleyWu, Mert Yuksekgonul, Linjun Zhang, James Zou "Discover and Cure:Concept-aware Mitigation of Spurious Correlation" Proceedings of the 40th International Conference on Machine Learning, Honolulu, Hawaii, USA. PMLR 202, 2023.

Non Patent Document 2: Christoph H. Lampert Hannes Nickisch Stefan Harmeling "Learning To Detect Unseen Object Classes by Between-Class Attribute Transfer"

Non Patent Document 3: Pang Wei Koh, Thao Nguyen, Yew Siang Tang, Stephen Mussmann, Emma Pierson, Been Kim, Percy Liang "Concept Bottleneck Models" Proceedings of the 37th International Conference on Machine Learning, Online, PMLR 119, 2020.

However, in the above-described related art, there is a problem that the bias of the machine learning model is not mitigated in consideration of the feature specific to the deep fake moving image.

The above-described related art is a technique specialized for a still image, and is not applicable to a deep fake moving image. For example, time-series frames included in a moving image have a relationship with each other, but in the related art, it is difficult to consider these relationships.

Accordingly, it is an object in one aspect of an embodiment of the invention to provide an information processing program, an information processing method, and an information processing apparatus capable of mitigating bias of a machine learning model in consideration of features specific to a deep fake moving image.

### SUMMARY

According to an aspect of the embodiments, an information processing program causes a computer to execute a process including: classifying time-series frames into a plurality of clusters by executing clustering on the time-series frames based on feature amounts of the time-series frames, the time-series frames being included in a moving image belonging to a class of a real moving image or a class of a fake moving image; extracting a concept from each of the plurality of clusters; determining whether the concept extracted from the plurality of clusters is a concept specific to the class or a concept specific to the cluster; setting a weight to the plurality of clusters based on the determination result; and training a model for estimating a class of a target moving image based on a frame selected based on weights set for the plurality of clusters.

### BRIEF DESCRIPTION OF DRAWINGS

FIG. 1 is a diagram for explaining an unnatural change in time series included in a deep fake moving image;
FIG. 2 is a diagram illustrating an example of a concept detected from a moving image;
FIG. 3 is a diagram for explaining processing of an information processing apparatus according to the present embodiment;
FIG. 4 is a diagram (1) for explaining cluster generation processing;
FIG. 5 is a diagram (2) for explaining cluster generation processing;
FIG. 6 is a diagram (3) for explaining cluster generation processing;
FIG. 7 is a diagram for explaining concept identification processing;
FIG. 8 is a diagram for explaining weight determination processing;
FIG. 9 is a functional block diagram illustrating a configuration of the information processing apparatus according to the present embodiment;
FIG. 10 is a flowchart illustrating a processing procedure of the information processing apparatus according to the present embodiment;
FIG. 11 is a diagram illustrating an example of a hardware configuration of a computer that implements functions similar to those of the information processing apparatus of the present embodiment; and
FIG. 12 is a diagram for describing data augmentation.

### DESCRIPTION OF EMBODIMENTS

Preferred embodiments will be explained with reference to accompanying drawings. Note that the present invention is not limited by the embodiment.

Prior to describing the present embodiment, a related art will be supplementarily described. For example, in the DISC, in the class classification task of the still image, a concept having a spurious correlation is detected for each class, and the spurious correlation is mitigated. In the following description, a still image (also referred to as a static image) is simply referred to as an image.

Here, a concept is a feature existing in an image across classes, and each class includes a combination of different concepts. For example, if there are many images of dogs taken with chairs, a concept that is not specific to a class is detected separately from a concept that is specific to the target class (dogs, cats, horses, and the like) when classifying images of animals. For example, a concept that is not specific to a dog class is "Chair" or the like.

In the DISC, data augmentation is performed to mitigate non-specific concepts of the above-described classes. For example, to mitigate the concept "Chair" that is not specific to the dog class, the spurious correlation between the dog and the chair is mitigated by combining images of the chair with images of other classes.

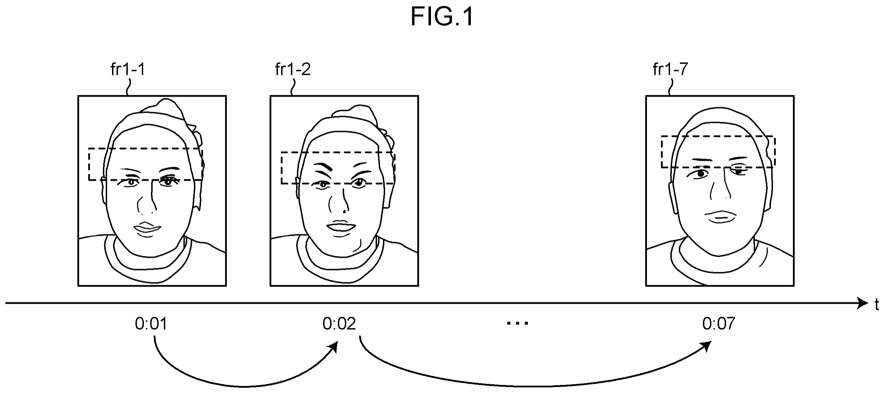

In the above-described related art, it is difficult to identify an unnatural change in time series included in a deep fake moving image. FIG. 1 is a diagram illustrating an unnatural change in time series included in a deep fake moving image. The moving image includes time-series frames. In the example illustrated in FIG. 1, the description will be given using frames fr1-1, fr1-2, and fr1-7. The horizontal axis illustrated in FIG. 1 is a time axis.

The frame fr1-1 is an image at the time 0:01 and is an image of a person looking forward. The frame fr1-2 is an image at the time 0:02 and is an image of a person looking forward. The frame fr1-7 is an image at the time 0:07 and is an image of a person looking upward.

For example, in the change from the frame fr1-1 to the frame fr1-2, the eyebrow suddenly moves while the person is facing forward, and the change is unnatural and inconsistent. On the other hand, in the change from the frame fr1-2 to the frame fr1-7, the eyebrows move upward due to the movement of the face such as the person facing upward, and the movement is natural and consistent.

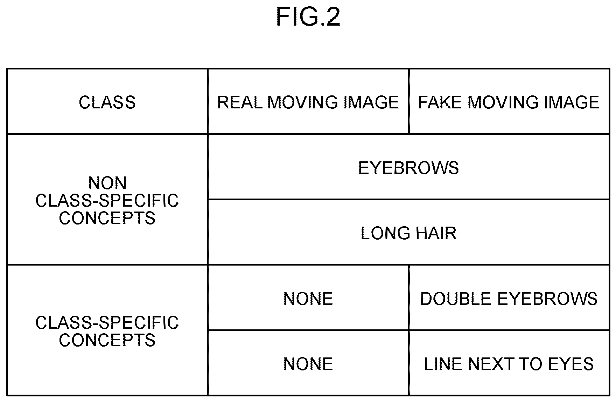

Note that, as an example of a concept detected from a deep fake moving image or a moving image that is not a deep fake moving image, there is a concept as illustrated in FIG. 2 below. In the following description, a deep fake moving image is referred to as a "fake moving image", and a moving image that is not a deep fake moving image is referred to as a "real moving image". Furthermore, in a case where the fake moving image and the real moving image are not particularly distinguished, they are simply referred to as "moving images".

FIG. 2 is a diagram illustrating an example of a concept detected from a moving image. In the example illustrated in FIG. 2, the classes are "real moving image" and "fake moving image". The concepts that are not specific to the class "real moving image" and the class "fake moving image" are "eyebrows", "long hair", and the like.

A concept specific to the class "real moving image" is "none". Concepts specific to the class "fake moving image" are "double eyebrows", "a line next to eyes", and the like.

In a case where a class is classified into a real moving image or a fake moving image, a target category is common to a face of a person, but the target category varies depending on an individual, and a concept is unrealistic and is not easily expressed from a sample of a fake image.

The related art, the fake moving image, and the like have been supplementarily described above.

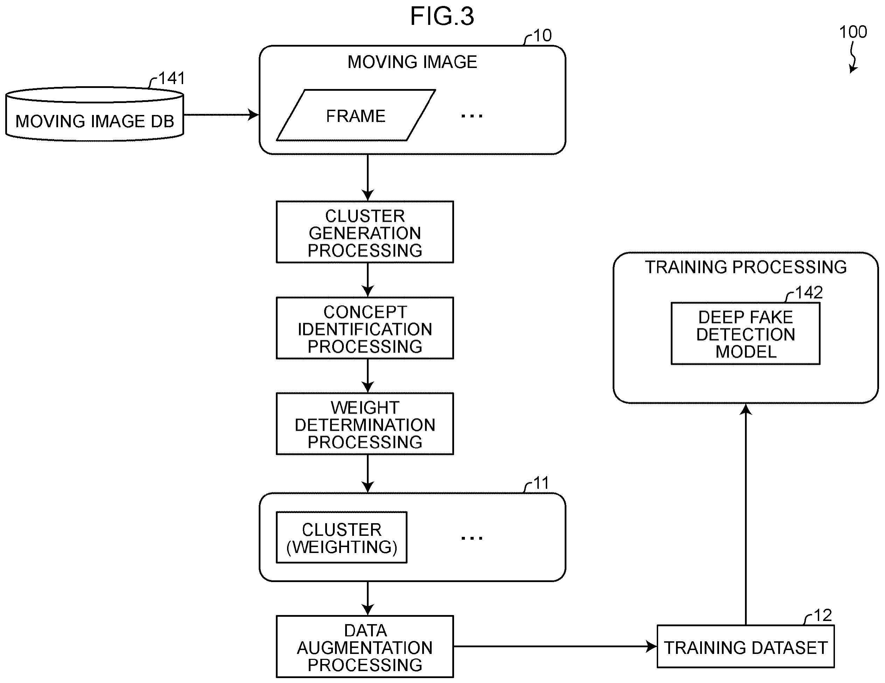

Next, an example of processing of the information processing apparatus according to the present embodiment will be described. The information processing apparatus according to the present embodiment will be referred to as an "information processing apparatus 100". FIG. 3 is a diagram for explaining processing of the information processing apparatus according to the present embodiment.

The information processing apparatus 100 acquires a moving image 10 from a moving image DB 141 and divides the moving image 10 into a plurality of frames. The moving image 10 includes time-series frames (still images). A time-series frame number and time information are assigned to each frame. Furthermore, information of a class (real moving image or fake moving image) to which the moving image belongs is assigned to the moving image 10 (each frame).

The information processing apparatus 100 executes cluster generation processing, concept identification processing, and weight determination processing on a plurality of frames to generate a set of clusters 11. The set of clusters 11 includes a plurality of clusters, and a weight is set for each cluster. Each cluster includes a plurality of frames. The information processing apparatus 100 probabilistically samples a cluster from the set of clusters 11. Among the clusters included in the set of clusters 11, a cluster having a larger weight (a frame belonging to a cluster) has a higher probability of being sampled.

The information processing apparatus 100 executes data augmentation processing on each frame of the sampled cluster to obtain augmented data. The information processing apparatus 100 generates training data using the augmented data as an input. In addition, if the moving image to which the original frame belongs is the "fake moving image", the ground truth label of the training data is "fake moving image", and if the moving image to which the original frame belongs is the "real moving image", the ground truth label of the training data is "real moving image".

The information processing apparatus 100 generates a plurality of pieces of training data (training dataset 12) by repeatedly executing the above-described processing. The information processing apparatus 100 trains a deep fake detection model 142 based on the training dataset 12.

Next, the cluster generation processing, the concept identification processing, and the weight determination processing described with reference to FIG. 3 will be described in order.

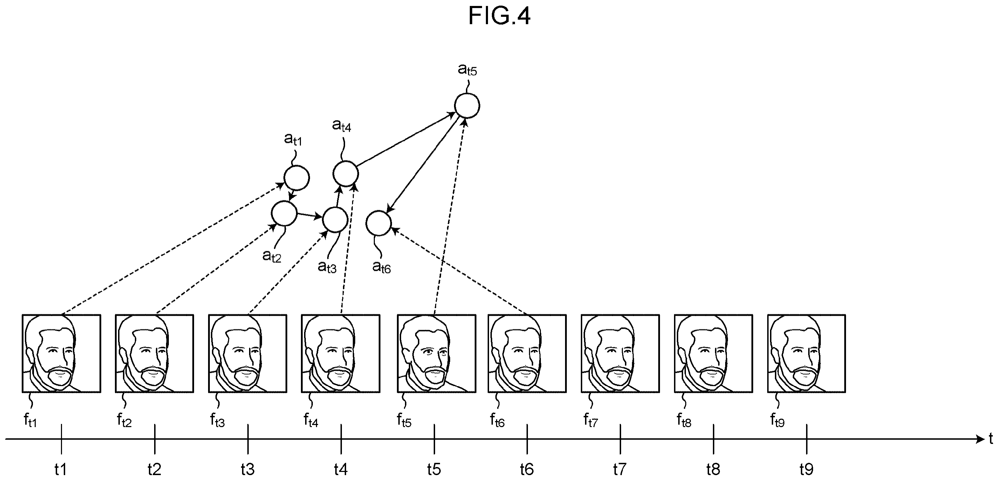

First, the cluster generation processing will be described. FIGS. 4, 5, and 6 are diagrams for explaining the cluster generation processing. First, FIG. 4 will be described. The information processing apparatus 100 extracts the feature amount of the frame from the frame included in the moving image 10. For example, the feature amount of the frame is a vector or the like. The horizontal axis in FIG. 4 is a time axis.

In the example illustrated in FIG. 4, the description will be given using frames fₜ₁, fₜ₂, fₜ₃, fₜ₄, fₜ₅, fₜ₆, fₜ₇, fₜ₈, and fₜ₉. The times of the frames fₜ₁, fₜ₂, fₜ₃, fₜ₄, fₜ₅, fₜ₆, fₜ₇, fₜ₅, and fₜ₉ are t1, t2, t3, t4, t5, t6, t7, t8, and t9, respectively.

The information processing apparatus 100 extracts feature amounts from the frames fₜ₁ to fₜ₉. For example, the feature amount of the frame fₜ₁ is set as a feature amount aₜ₁. The feature amount of the frame fₜ₂ is defined as a feature amount aₜ₂. The feature amount of the frame fₜ₃ is defined as a feature amount aₜ₃. The feature amount of the frame fₜ₄ is defined as a feature amount aₜ₄. The feature amount of the frame fₜ₅ is defined as a feature amount aₜ₅. The feature amount of the frame fₜ₆ is referred to as a feature amount aₜ₆. In FIG. 4, illustration of feature amounts of fₜ₇, fₜ₈, and fₜ₉ is omitted. The positions of the feature amounts aₜ₁ to aₜ₆ illustrated in FIG. 4 are positions in the feature space.

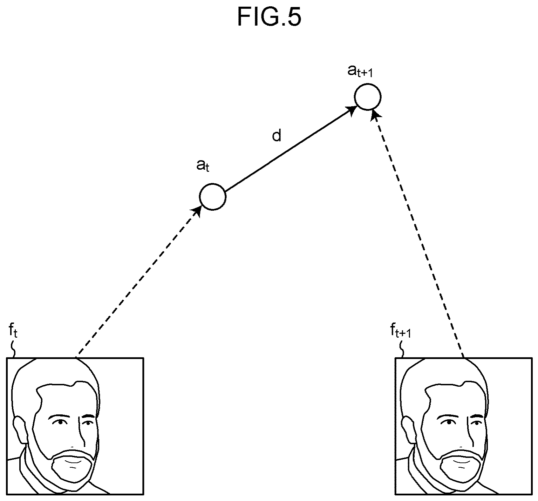

The description of FIG. 5 will be made. The information processing apparatus 100 calculates a distance d on the feature space between a feature amount at of a frame ft at a certain time t and a feature amount aₜ₊₁ of a frame fₜ₊₁ at the next time t+1. The information processing apparatus 100 sets a vector corresponding to the frame ft. For example, the vector corresponding to the frame ft is a vector obtained by integrating the feature amount at of the frame fₜ and the distance d (distance between the feature amount at and the feature amount aₜ₊₁).

Although not illustrated, the information processing apparatus 100 calculates a distance d on the feature space between the feature amount aₜ₊₁ of the frame fₜ₊₁ at a certain time t+1 and a feature amount aₜ₊₂ of a frame fₜ₊₂ at the next time t+2. The information processing apparatus 100 uses a vector obtained by integrating the feature amount aₜ₊₁ of the frame fₜ₊₁ and the distance d (distance between the feature amount aₜ₊₁ and the feature amount aₜ₊₂) as a vector corresponding to the frame fₜ₊₁. The information processing apparatus 100 sets the vector of each frame by similarly setting the vector of the following frame.

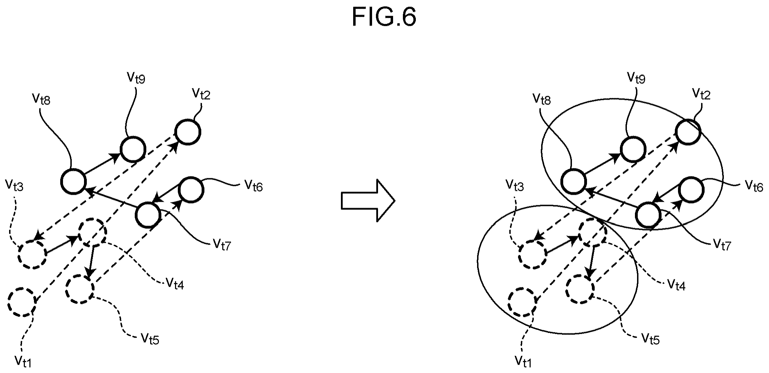

The description of FIG. 6 will be made. Vectors vₜ₁, vₜ₂, vₜ₃, vₜ₄, vₜ₅, vₜ₆, vₜ₇, vₜ₈, and vₜ₉ illustrated in FIG. 6 are vectors of the frames fₜ₁, fₜ₂, fₜ₃, fₜ₄, fₜ₅, fₜ₆, fₜ₇, fₜ₅, and fₜ₉, respectively. The information processing apparatus 100 classifies the frames corresponding to the vectors vₜ₁ to vₜ₉ into a plurality of clusters by performing clustering on the vectors vₜ₁ to vₜ₉. The information processing apparatus 100 may perform clustering using a k-means method, a Gaussian Mixture Model, or the like.

For example, in the example illustrated in FIG. 6, since the vectors vₜ₁, vₜ₃, vₜ₄, and vₜ₅ are classified into the same cluster, the information processing apparatus 100 classifies the frames fₜ₁, fₜ₃, fₜ₄, and fₜ₅ into the same cluster. In addition, since the vectors vₜ₂, vₜ₆, vₜ₇, vₜ₈, and vₜ₉ are classified into the same cluster, the information processing apparatus 100 classifies the frames fₜ₂, fₜ₆, fₜ₇, fₜ₈, and ft₉ into the same cluster.

The cluster generation processing executed by the information processing apparatus 100 has been described above.

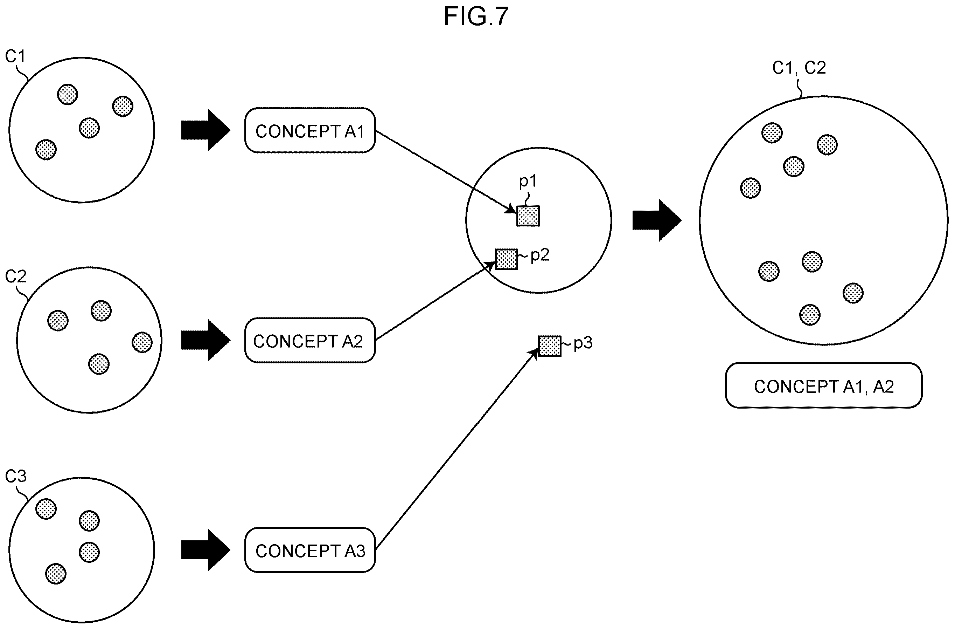

Next, concept identification processing will be described. FIG. 7 is a diagram for describing the concept identification processing. The information processing apparatus 100 extracts a concept from each cluster generated by the cluster generation processing. In the example illustrated in FIG. 7, for convenience of description, description will be made using clusters C1, C2, and C3. For example, the information processing apparatus 100 extracts a concept A1 from the cluster C1. The information processing apparatus 100 extracts a concept A2 from the cluster C2. The information processing apparatus 100 extracts a concept A3 from the cluster C3.

The information processing apparatus 100 specifies positions on the feature space with respect to the concepts A1 to A3. For example, the position of the feature space of the concept A1 is p1. The position of the feature space of the concept A2 is p2. The position of the feature space of the concept A3 is p3. For example, the position of the feature space of a concept is a numerical vector or the like that generalizes a visual feature of the corresponding concept. For example, in a case where there is a concept of a stripe pattern, images of various stripe patterns may be collected, and a numerical vector obtained as a result of extracting the common feature may be set as the position of the feature space. Furthermore, a numerical vector obtained as a result of mapping the linguistic representation of the concept to a semantic space (such that "truck" and "car" are close but "airplane" is far apart) may be used as the position of the feature space.

The information processing apparatus 100 clusters the concepts based on the positions of the feature spaces with respect to the concepts A1 to A3. For example, the information processing apparatus 100 classifies concepts for which the distance at each position is less than a predetermined distance into the same cluster. The information processing apparatus 100 may perform clustering using a k-means method, a Gaussian Mixture Model, or the like. The example illustrated in FIG. 7 illustrates an example in which the positions p1 and p2 are classified into the same cluster.

The information processing apparatus 100 integrates concepts belonging to the same cluster. For example, since the position p1 of the concept A1 and the position p2 of the concept A2 belong to the same cluster, the information processing apparatus 100 integrates the concept A1 and the concept A2. Thus, the concepts corresponding to the cluster C1 are the concepts A1 and A2, and the concepts corresponding to the cluster C2 are the concepts A1 and A2.

In a case where the same combination of concepts is found in different clusters, the information processing apparatus 100 integrates such clusters. For example, the cluster C1 and the cluster C2 are the same combination of concepts. In this case, the information processing apparatus 100 generates a cluster C1,2 in which the clusters C1 and C2 are integrated, and sets a concept corresponding to the cluster C1,2 in the concepts A1 and A2.

Note that the information processing apparatus 100 may extract a concept in any manner from a plurality of frames included in the cluster. For example, the information processing apparatus 100 inputs a plurality of frames to an image caption generation model or the like, causes "what is shown" to be output in natural language, and specifies the output result as a semantic summary (concept) of the corresponding cluster. The concept identification processing executed by the information processing apparatus 100 has been described above. Note that the information processing apparatus 100 may classify a cluster concept into any predetermined concept using the image caption generation model.

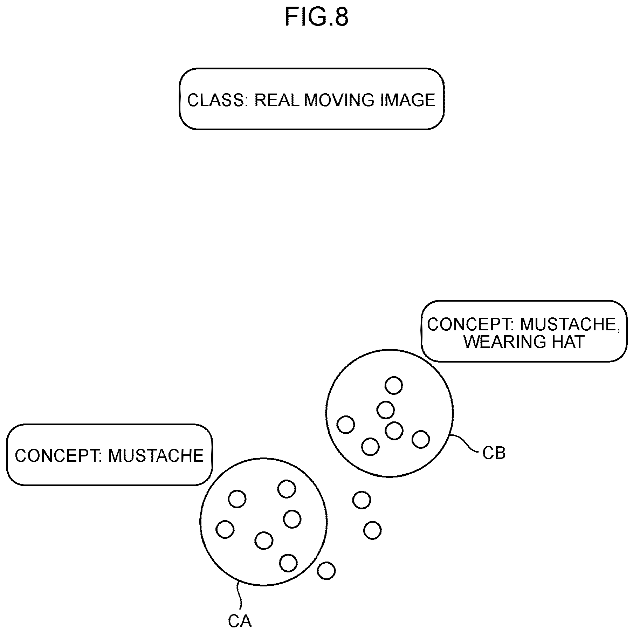

Next, the weight determination processing will be described. FIG. 8 is a diagram for explaining the weight determination processing. The information processing apparatus 100 executes the following processing for each class (real moving image, fake moving image). In the example of FIG. 8, description will be given using a result of executing the cluster generation processing and the concept identification processing described above on each frame included in the moving image of the class "real moving image". For example, a plurality of frames included in a moving image is classified into a cluster CA and a cluster CB, and a concept of the cluster CA is assumed as a "mustache", and a concept of the cluster CB is assumed as a "mustache, wearing a hat".

The information processing apparatus 100 calculates an occurrence rate across clusters of concepts. The information processing apparatus 100 specifies a concept having a high occurrence rate across clusters as a concept specific to a class. For example, in FIG. 8, since the concept "mustache" appears in the clusters CA and CB and has a high occurrence rate across clusters, the information processing apparatus 100 identifies the concept as a concept specific to the class.

On the other hand, the information processing apparatus 100 specifies a concept having a low occurrence rate across clusters as a concept specific to a cluster. For example, in FIG. 8, since the concept "wearing a hat" appears only in the cluster CA and has a lower occurrence rate across clusters, compare to the concept "mustache", the information processing apparatus 100 identifies the concept "wearing a hat" as a concept specific to the cluster.

By executing the above-described processing, the information processing apparatus 100 classifies each concept corresponding to a cluster into a concept specific to a class and a concept specific to a cluster. The information processing apparatus 100 sets the weight of a cluster having a high ratio of concepts specific to the cluster (each frame belonging to the cluster) to be larger.

In the example illustrated in FIG. 8, since the concept of the cluster CA corresponds to only the concept "mustache" specific to the cluster, the ratio of the concepts specific to the cluster is high. On the other hand, since the concept of the cluster CB corresponds to the concept "mustache" specific to the cluster and the concept "wearing a hat" specific to the class, the ratio of the concepts specific to the cluster is lower than that of the class CA. In this case, when setting a weight to each frame of the cluster CA and each frame of the cluster CB, the information processing apparatus 100 sets the weight of each frame of the cluster CA to be higher than the weight of each frame of the cluster CB. Note that the information processing apparatus 100 may define in advance the relationship between the ratio of the concept specific to the cluster and the weight, and set the weight for each frame of each cluster based on such a definition.

In the description of FIG. 8, each frame of the moving image of the class "real moving image" has been used. However, a weight is similarly set for each frame of the moving image of the class "fake moving image". The weight determination processing executed by the information processing apparatus 100 has been described above.

The information processing apparatus 100 executes the cluster generation processing, the concept identification processing, and the weight determination processing described above to generate the set of clusters 11 described with reference to FIG. 3.

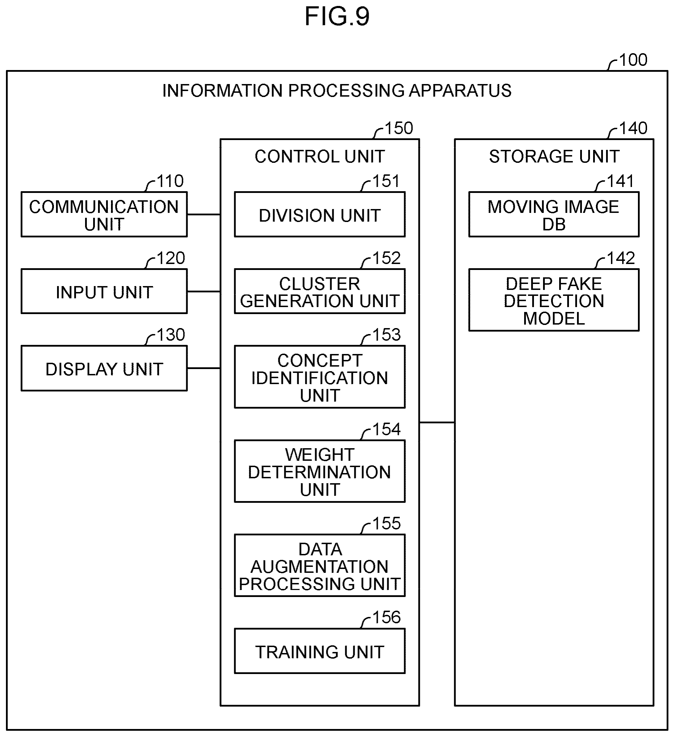

Next, a configuration example of the information processing apparatus 100 described above will be described. FIG. 9 is a functional block diagram illustrating a configuration of the information processing apparatus according to the present embodiment. As illustrated in FIG. 9, the information processing apparatus 100 includes a communication unit 110, an input unit 120, a display unit 130, a storage unit 140, and a control unit 150.

The communication unit 110 executes data communication with an external device or the like via a network 32. For example, the communication unit 110 may acquire a moving image or the like stored in the moving image DB 141 from an external device.

The input unit 120 is an input device that inputs various types of information to the control unit 150 of the information processing apparatus 100. For example, the input unit 120 corresponds to a keyboard, a mouse, a touch panel, or the like.

The display unit 130 is a display device that displays information output from the control unit 150.

The storage unit 140 includes the moving image DB 141 and the deep fake detection model 142. The storage unit 140 is a memory or the like.

The moving image DB 141 stores a plurality of real moving images and a plurality of fake moving images. The real moving image is a moving image belonging to the class "real moving image". The fake moving image is a moving image belonging to the class "fake moving image". The moving image includes time-series frames.

The deep fake detection model 142 is a machine learning model that determines whether a moving image is a fake moving image. By inputting a moving image (time-series frames) to the deep fake detection model 142, the class of the moving image is output. The deep fake detection model is a neural network (NN) or the like.

The control unit 150 includes a division unit 151, a cluster generation unit 152, a concept identification unit 153, a weight determination unit 154, a data augmentation processing unit 155, and a training unit 156. The control unit 150 is a central processing unit (CPU), a graphics processing unit (GPU), or the like. Furthermore, the control unit 150 may be realized by a combination of a CPU and a GPU. The division unit 151, the cluster generation unit 152, the concept identification unit 153, the weight determination unit 154, the data augmentation processing unit 155, and the training unit 156 can also be implemented by the CPU and the GPU working together (in cooperation).

The division unit 151 acquires a moving image from the moving image DB 141 and divides the acquired moving image into a plurality of frames. The division unit 151 assigns a frame number in chronological order to each frame. Furthermore, the division unit 151 assigns information of a class to which the moving image belongs to each frame. The division unit 151 outputs the plurality of divided frames to the cluster generation unit 152.

The cluster generation unit 152 clusters a plurality of frames to classify the frames into a plurality of clusters. The cluster generation unit 152 outputs the clustering result to the concept identification unit 153. For example, the cluster generation unit 152 executes the cluster generation processing described with reference to FIGS. 4 to 6.

Note that the cluster generation unit 152 may extract a feature amount by inputting a frame to a model such as a Vision Transformer. Furthermore, the cluster generation unit 152 may input the frame to the deep fake detection model 142 and extract a value output from the intermediate layer of the deep fake detection model 142 as an image vector.

The concept identification unit 153 extracts a concept from each cluster. The concept identification unit 153 outputs a concept extraction result to the weight determination unit 154. For example, the concept identification unit 153 executes the concept identification processing described with reference to FIG. 7.

Note that the concept identification unit 153 inputs a plurality of frames belonging to a cluster to the image caption generation model or the like, outputs "what is shown" in a natural language, and specifies the output result as a semantic summary (concept) of the corresponding cluster. Furthermore, the concept identification unit 153 may input a plurality of frames belonging to a cluster to the deep fake detection model 142 and identify a value output from the intermediate layer of the deep fake detection model 142 as a concept.

The weight determination unit 154 determines the weight of each cluster based on the concept of each cluster and sets the weight to each cluster (a plurality of frames). For example, the weight determination unit 154 executes the weight determination processing described in FIG. 8.

The division unit 151, the cluster generation unit 152, the concept identification unit 153, and the weight determination unit 154 repeatedly execute the above-described processing for each moving image stored in the moving image DB 141, thereby generating the set of clusters 11 described in FIG. 3.

The data augmentation processing unit 155 probabilistically samples a cluster from the set of clusters 11 using the weight set for each cluster. The data augmentation processing unit 155 may perform the sampling in cluster units or frame units. The data augmentation processing unit 155 performs a data augmentation processing on each frame of the sampled cluster. The data augmentation processing unit 155 generates a training dataset in which each frame on which the data augmentation processing has been executed is set as input data and the sampled cluster class is set as correct answer data. The data augmentation processing unit 155 outputs the training dataset to the training unit 156.

The data augmentation processing unit 155 may execute the data augmentation processing using a related art such as CutMix. For example, the data augmentation processing unit 155 selects a frame (first frame) to be mitigated and another frame (second frame). The other frames may belong to clusters different from the sampled clusters, or may be randomly selected. The data augmentation processing unit 155 performs data augmentation processing by randomly cutting out a partial rectangular region of the second frame and attaching the partial rectangular region to a rectangular region at the same position of the first frame. The data augmentation processing unit 155 may mix the ground truth label of the first frame and the ground truth label of the second frame as the ground truth label of the frame after the data augmentation processing.

The training unit 156 trains the deep fake detection model 142 using the training dataset. For example, the training unit 156 obtains training data from the training dataset, and adjusts the parameters of the deep fake detection model 142 so that an output when inputting the input data of the training data into the deep fake detection model 142 approaches a ground truth label of the training data. For example, the training unit 156 trains the deep fake detection model 142 based on the back propagation method.

Meanwhile, the information processing apparatus 100 may collectively convert the moving images in the moving image DB 141 into the training dataset using the deep fake detection model 142 before training, or may proceed the training of the deep fake detection model 142 while converting the moving image in the moving image DB 141 into the training dataset for each training epoch. In the former method, image vectors and concepts are extracted using the deep fake detection model 142 before training.

In the latter method, image vectors and concepts are extracted using the deep fake detection model 142 in the middle of training. Which processing is to be performed is set in advance by the administrator.

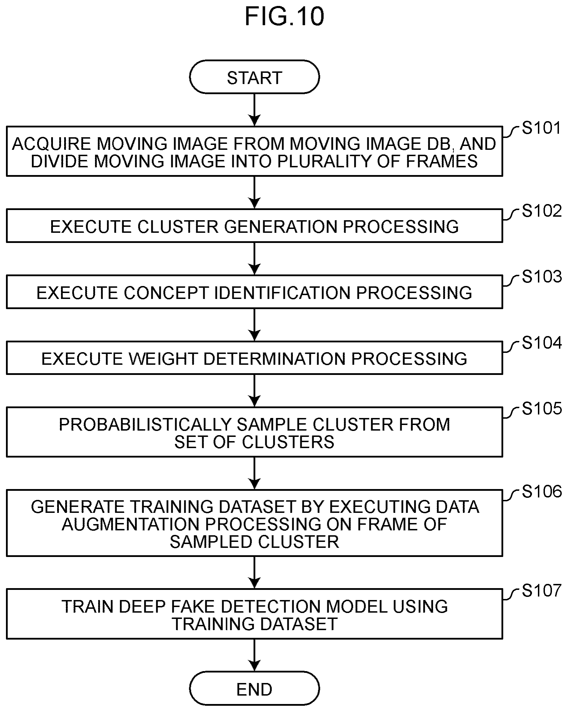

Next, an example of a processing procedure of the information processing apparatus 100 according to the present embodiment will be described. FIG. 10 is a flowchart illustrating the processing procedure of the information processing apparatus according to the present embodiment. As illustrated in FIG. 10, the division unit 151 of the information processing apparatus 100 acquires a moving image from the moving image DB 141 and divides the moving image into a plurality of frames (step S101).

The cluster generation unit 152 of the information processing apparatus 100 executes cluster generation processing (step S102). The concept identification unit 153 of the information processing apparatus 100 executes concept identification processing (step S103).

The weight determination unit 154 of the information processing apparatus 100 executes weight determination processing (step S104). The data augmentation processing unit 155 of the information processing apparatus 100 probabilistically samples a cluster from the set of clusters 11 (step S105).

The data augmentation processing unit 155 generates a training dataset by executing data augmentation processing on the frame of the sampled cluster (step S106). The training unit 156 of the information processing apparatus 100 trains the deep fake detection model 142 using the training dataset (step S107).

Next, effects of the information processing apparatus 100 according to the present embodiment will be described. The information processing apparatus 100 classifies a plurality of frames included in a moving image into a plurality of clusters, extracts a concept from each cluster, and determines whether the extracted concept is a concept specific to a class of the moving image or a concept specific to the cluster. The information processing apparatus 100 sets a weight to each cluster based on the determination result and probabilistically samples the cluster. The information processing apparatus 100 trains the deep fake detection model 142 based on the frame of the cluster sampled probabilistically. As a result, it is possible to mitigate the bias of the deep fake detection model 142 in consideration of features specific to the fake moving image.

In addition, even in a case where the type of concept of the cluster is unknown or difficult to define, weighting for data augmentation between clusters can be performed. For example, in a case where "eyeglasses are flickering" and "face with eyeglasses" are extracted as concepts of each cluster, although it is difficult to perform pre-definition, an appropriate weight can be set to each cluster by the above-described processing.

The information processing apparatus 100 selects a frame for training the deep fake detection model 142 by probabilistically sampling based on the weight set in the cluster. This can mitigate the bias of the deep fake detection model 142.

The information processing apparatus 100 executes clustering using a vector obtained by integrating image vectors of frames and distances between preceding and following frames as a feature amount of a frame. As a result, the plurality of frames can be appropriately classified into clusters.

For a plurality of concepts extracted from a certain cluster, the information processing apparatus 100 sets a weight of the certain cluster higher in a case where a ratio of concepts specific to the cluster is higher than a ratio of concepts specific to the class. As a result, it is possible to increase the probability of using a cluster having a high ratio of concepts specific to the cluster as training data and mitigate the bias of the deep fake detection model 142.

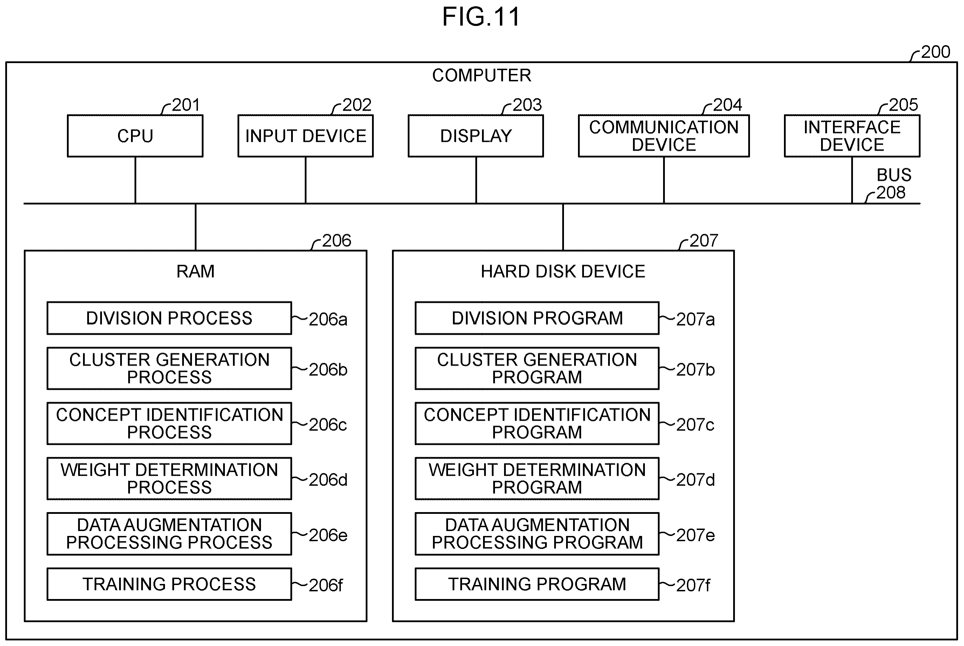

Next, an example of a hardware configuration of a computer that implements functions similar to those of the information processing apparatus 100 described above will be described. FIG. 11 is a diagram illustrating an example of the hardware configuration of the computer that implements functions similar to those of the information processing apparatus of the present embodiment.

As illustrated in FIG. 11, a computer 200 includes a CPU 201 that executes various types of arithmetic processing, an input device 202 that receives an input of data from a user, and a display 203. Furthermore, the computer 200 includes a communication device 204 that exchanges data with an external device or the like via a wired or wireless network, and an interface device 205. In addition, the computer 200 includes a RAM 206 that temporarily stores various types of information and a hard disk device 207. Each of devices 201 to 207 is connected to a bus 208. Note that the computer 200 may include a plurality of CPUs in addition to the CPU 201.

The hard disk device 207 includes a division program 207a, a cluster generation program 207b, a concept identification program 207c, a weight determination program 207d, a data augmentation processing program 207e, and a training program 207f. The CPU 201 reads each of the programs 207a to 207f and develops the programs in the RAM 206.

The division program 207a functions as a division process 206a. The cluster generation program 207b functions as a cluster generation process 206b. The concept identification program 207c functions as a concept identification process 206c. The weight determination program 207d functions as a weight determination process 206d. The data augmentation processing program 207e functions as a data augmentation processing process 206e. The training program 207f functions as a training process 206f.

The processing of the division process 206a corresponds to the processing of the division unit 151. The processing of the cluster generation process 206b corresponds to the processing of the cluster generation unit 152. The processing of the concept identification process 206c corresponds to the processing of the concept identification unit 153. The processing of the weight determination process 206d corresponds to the processing of the weight determination unit 154. The processing of the data augmentation processing process 206e corresponds to the processing of the data augmentation processing unit 155. The processing of the training process 206f corresponds to the processing of the training unit 156.

Each of the programs 207a to 207f does not necessarily need to be stored in the hard disk device 207 from the beginning. For example, each program is stored in a "portable physical medium" such as a flexible disk (FD), a CD-ROM, a DVD, a magneto-optical disk, or an IC card inserted into the computer 200. Then, the computer 200 may read and execute each of the programs 207a to 207f.

The bias of the machine learning model can be mitigated in consideration of features specific to the deep fake moving image.

## Claims

1. An information processing program that causes a computer (200) to execute a process comprising:
classifying time-series frames into a plurality of clusters by executing clustering on the time-series frames based on feature amounts of the time-series frames, the time-series frames being included in a moving image belonging to a class of a real moving image or a class of a fake moving image;
extracting a concept from each of the plurality of clusters;
determining whether the concept extracted from the plurality of clusters is a concept specific to the class or a concept specific to the cluster;
setting a weight to the plurality of clusters based on the determination result; and
training a model for estimating a class of a target moving image based on a frame selected based on weights set for the plurality of clusters.

2. The information processing program according to claim 1, wherein the process further includes selecting a frame for training the model by probabilistically sampling based on the set weight.

3. The information processing program according to claim 1, wherein the process further includes executing clustering using a vector obtained by integrating an image vector of the frame and distances between preceding and following frames as a feature amount of the frame.

4. The information processing program according to claim 1, wherein the process further includes, for a plurality of concepts extracted from a certain cluster, in a case where a ratio of concepts specific to the cluster is higher than a ratio of concepts specific to the class, setting the weight of the certain cluster higher.

5. The information processing program according to claim 1, wherein the process further includes training the model using training data in which a result of performing data augmentation on the selected frame is set as input data, and a class of a moving image including the selected frame is set as a ground truth label.

6. An information processing method carried out by a computer (200), comprising:
classifying time-series frames into a plurality of clusters by executing clustering on the time-series frames based on feature amounts of the time-series frames, the time-series frames being included in a moving image belonging to a class of a real moving image or a class of a fake moving image;
extracting a concept from each of the plurality of clusters;
determining whether the concept extracted from the plurality of clusters is a concept specific to the class or a concept specific to the cluster;
setting a weight to the plurality of clusters based on the determination result; and
training a model for estimating a class of a target moving image based on a frame selected based on weights set for the plurality of clusters.

7. The information processing method according to claim 6, further including selecting a frame for training the model by probabilistically sampling based on the set weight.

8. The information processing method according to claim 6, further including executing clustering using a vector obtained by integrating an image vector of the frame and distances between preceding and following frames as a feature amount of the frame.

9. The information processing method according to claim 6, further including, for a plurality of concepts extracted from a certain cluster, in a case where a ratio of concepts specific to the cluster is higher than a ratio of concepts specific to the class, setting the weight of the certain cluster higher.

10. The information processing method according to claim 6, further including training the model using training data in which a result of performing data augmentation on the selected frame is set as input data, and a class of a moving image including the selected frame is set as a ground truth label.

11. An information processing apparatus (100) comprising a control unit (150) configured to:
classify time-series frames into a plurality of clusters by executing clustering on the time-series frames based on feature amounts of the time-series frames, the time-series frames being included in a moving image belonging to a class of a real moving image or a class of a fake moving image;
extract a concept from each of the plurality of clusters;
determine whether the concept extracted from the plurality of clusters is a concept specific to the class or a concept specific to the cluster;
set a weight to the plurality of clusters based on the determination result; and
train a model for estimating a class of a target moving image based on a frame selected based on weights set for the plurality of clusters.

12. The information processing apparatus (100) according to claim 11, wherein the control unit (150) further selects a frame for training the model by probabilistically sampling based on the set weight.

13. The information processing apparatus (100) according to claim 11, wherein the control unit (150) further executes clustering using a vector obtained by integrating an image vector of the frame and distances between preceding and following frames as a feature amount of the frame.

14. The information processing apparatus (100) according to claim 11, wherein the control unit (150) further, for a plurality of concepts extracted from a certain cluster, in a case where a ratio of concepts specific to the cluster is higher than a ratio of concepts specific to the class, sets the weight of the certain cluster higher.

15. The information processing apparatus (100) according to claim 11, wherein the control unit (150) further trains the model using training data in which a result of performing data augmentation on the selected frame is set as input data, and a class of a moving image including the selected frame is set as a ground truth label.
